(19) Europäisches Patentamt
European Patent Office
Office européen des brevets

(11) EP 3 063 179 B1

(12) **FASCICULE DE BREVET EUROPEEN**

(45) Date de publication et mention de la délivrance du brevet:
**04.12.2019 Bulletin 2019/49**

(21) Numéro de dépôt: **14793502.7**

(22) Date de dépôt: **29.10.2014**

(51) Int Cl.:
*C08C 19/25* (2006.01) *B60C 1/00* (2006.01)
*C08C 19/44* (2006.01) *C08K 3/36* (2006.01)
*C08L 15/00* (2006.01) *C08L 53/02* (2006.01)

(86) Numéro de dépôt international:
**PCT/EP2014/073236**

(87) Numéro de publication internationale:
**WO 2015/063161 (07.05.2015 Gazette 2015/18)**

# (54) ELASTOMÈRE DIÉNIQUE MODIFIÉ COMPRENANT MAJORITAIREMENT UN ÉLASTOMÈRE DIÉNIQUE COUPLÉ PAR UN COMPOSÉ ALCOXYSILANE PORTANT UN GROUPE ÉPOXYDE ET FONCTIONNALISÉ AMINE EN EXTRÉMITÉ DE CHAÎNE

MODIFIZIERTES DIENELASTOMER MIT ÜBERWIEGEND EINEM DIENELASTOMER, GEKOPPELT MITTELS EINER ALKOXYLSILANVERBINDUNG MIT EINER AMINFUNKTIONALISIERTEN EPOXIDGRUPPE AM ENDE DER KETTE

MODIFIED DIENE ELASTOMER MOSTLY COMPRISING A DIENE ELASTOMER COUPLED BY AN ALKOXYSILANE COMPOUND BEARING AN AMINE-FUNCTIONALISED EPOXIDE GROUP AT THE END OF THE CHAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2013 FR 1360607**

(43) Date de publication de la demande:
**07.09.2016 Bulletin 2016/36**

(73) Titulaire: **Compagnie Générale des Etablissements Michelin
63000 Clermont-Ferrand (FR)**

(72) Inventeurs:
- **DIRE, Charlotte
F-63040 Clermont-Ferrand Cedex 09 (FR)**
- **MARECHAL, Jean-Marc
F-63040 Clermont-Ferrand Cedex 09 (FR)**
- **SEEBOTH, Nicolas
F-63040 Clermont-Ferrand Cedex 09 (FR)**

(74) Mandataire: **Le Cam, Véronique Marie Christine
Manufacture Française des Pneumatiques Michelin
CBS/CORP/J/PI - F35 - Ladoux
23, place des Carmes-Déchaux
63040 Clermont-Ferrand Cedex 9 (FR)**

(56) Documents cités:
**FR-A1- 2 915 202 FR-A1- 2 930 554
FR-A1- 2 951 186 US-A- 5 554 696**

- **ZELINSKI R P ET AL: "Synthesis of trichain and tetrachain radial polybutadienes", JOURNAL OF POLYMER SCIENCE PART A: POLYMER CHEMISTRY, JOHN WILEY & SONS, INC, US, vol. 3, no. 1, 1 janvier 1965 (1965-01-01) , pages 93-103, XP008086967, ISSN: 0887-624X**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

L'invention se rapporte à un élastomère diénique modifié comprenant majoritairement l'élastomère diénique fonctionnalisé en milieu de chaîne par un groupe alcoxysilane, éventuellement hydrolysé, portant une fonction époxyde et fonctionnalisé en extrémité de chaîne par une fonction amine. L'invention concerne également un procédé de préparation d'un tel élastomère diénique modifié, une composition le comprenant, ainsi qu'un article semi-fini et un pneumatique comprenant cette composition.

Depuis que les économies de carburant et la nécessité de préserver l'environnement sont devenues une priorité, il est souhaitable de produire des mélanges possédant de bonnes propriétés mécaniques, en particulier une hystérèse aussi faible que possible afin de pouvoir les mettre en œuvre sous forme de compositions de caoutchouc utilisables pour la fabrication de divers produits semi-finis entrant dans la composition d'enveloppes de pneumatique et afin d'obtenir des pneumatiques possédant une résistance au roulement réduite.

La réduction de l'hystérèse des mélanges est un objectif permanent qui doit toutefois se faire en conservant l'aptitude à la mise en œuvre, en particulier à cru, des mélanges.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation ou bien l'utilisation d'amorceurs fonctionnels, le but étant d'obtenir une bonne interaction entre le polymère ainsi modifié et la charge, qu'il s'agisse du noir de carbone ou d'une charge inorganique renforçante.

Dans le cadre des mélanges contenant une charge inorganique renforçante, il a été proposé d'utiliser des copolymères diéniques fonctionnalisés par des groupements silanol.

On peut citer les brevets FR2951178B1, FR2915202B1 et EP778311B1 qui décrivent l'utilisation de polymères diéniques fonctionnalisés par un groupement silanol en extrémité de chaîne ou en milieu de chaîne pour diminuer l'hystérèse de compositions de caoutchouc renforcées à base notamment de charge inorganique renforçante. Dans le brevet FR2915202B1 en particulier, il est mentionné que la fonctionnalisation en milieu de chaîne permet d'améliorer la mise en œuvre à cru comparativement à une fonctionnalisation en extrémité de chaîne. Plus récemment, la demande de brevet WO2009077837A1 décrit des élastomères fonctionnalisés par un groupement silanol à une extrémité de chaîne et par un groupement aminé à l'autre extrémité de chaîne. Ces élastomères sont également décrits comme pouvant être associés à des élastomères étoilés, en particulier par du silicium ou de l'étain. Les associations illustrées conduisent toutefois à une composition de caoutchouc renforcée dont le compromis mise en œuvre / hystérèse n'est pas satisfaisant pour une application en pneumatique.

Afin de diminuer de façon plus importante l'hystérèse des mélanges, il a été proposé d'utiliser des élastomères diéniques fonctionnalisés par des composés du type aminoalcoxysilane.

On peut citer le brevet FR2867477A1 qui revendique la fonctionnalisation en extrémité de chaîne avec les composés [3-(diéthylamino)propyl]triméthoxysilane, [3-(diéthylamino)propyl]triéthoxysilane, [3-(éthyl-3-méthylamino)propyl]triméthoxysilane, [3-(éthyl-3-méthylamino)propyl]triéthoxysilane ainsi qu'une composition de caoutchouc à base de silice ou de noir de carbone. On peut également citer les brevets US8071689B2 et US8106130B2 qui revendiquent respectivement la fonctionnalisation en extrémité de chaîne avec un composé trialcoxysilane portant un groupement azoté, l'atome d'azote étant inclus dans un hétérocycle aromatique substitué ou non substitué, et avec un aminoalcoxysilane possédant 1 ou plus groupement alcoxysilyl et 2 ou plus groupements amine tertiaire. Dans la demande de brevet WO2009133068A1, il est mentionné que la fonctionnalisation en milieu de chaîne avec un composé trialcoxysilane portant une fonction amine secondaire ou tertiaire permet d'améliorer le compromis mise en œuvre à cru/hystérèse comparativement à une fonctionnalisation en extrémité de chaîne.

Une autre voie pour minimiser l'hystérèse des mélanges à base de charge inorganique renforçante est décrite dans la demande de brevet EP0692493A1 et consiste à utiliser des élastomères fonctionnalisés en extrémité de chaîne par des composés alcoxysilane portant un groupement glycidyl. On peut également citer la demande de brevet EP0692493 qui décrit des élastomères fonctionnalisés en milieu de chaîne par des composés alcoxysilane portant un groupe glycidyl.

Dans le brevet FR2951186 A1, il est mentionné que l'association de glycérol à un élastomère diénique fonctionnalisé choisi parmi les élastomères fonctionnalisés par un groupement comportant une fonction polaire comprenant au moins un atome d'oxygène, permet également une réduction de l'hystérèse de composition comprenant ces deux composants tout en améliorant la rigidité par rapport à une composition ne comprenant pas d'élastomère fonctionnalisé. Parmi les élastomères fonctionnalisés utilisables dans les compositions de caoutchouc, ce document envisage des élastomères fonctionnalisés comprenant un groupement alcoxysilane en milieu de chaîne portant une fonction époxy. Ce document envisage par ailleurs que des élastomères fonctionnalisés utilisables dans les compositions de caoutchouc puissent porter une fonction aminé en extrémité de chaîne.

Ces élastomères fonctionnalisés ont été décrits dans l'art antérieur comme efficaces pour réduire l'hystérèse. Néanmoins, il s'avère que les compositions contenant des élastomères ainsi modifiés ne présentent pas toujours un

compromis hystérèse/mise en œuvre optimal pour une utilisation en bande de roulement pour pneumatique.

C'est la raison pour laquelle des recherches ont été menées sur d'autres réactions de fonctionnalisation, en vue de l'obtention de compositions de caoutchouc possédant un compromis mise en œuvre à cru/hystérèse amélioré.

Le but de la présente invention est donc de proposer une telle composition. Un objectif est en particulier de proposer un élastomère fonctionnalisé interagissant de manière satisfaisante avec la charge renforçante d'une composition de caoutchouc le contenant afin d'en diminuer l'hystérèse, tout en conservant une mise en œuvre à cru acceptable, en vue notamment d'une utilisation en bande de roulement pour pneumatique.

Ce but est atteint en ce que les inventeurs viennent de découvrir de manière surprenante au cours de leurs recherches qu'un élastomère diénique modifié par couplage au moyen d'un agent porteur d'au moins une fonction époxyde et une fonction alcoxysilane, hydrolysable ou non en silanol, et dont les deux extrémités de chaîne sont fonctionnalisées à au moins 70% molaire par une fonction amine, confère aux compositions le contenant une amélioration remarquable et inattendue du compromis hystérèse / mise en œuvre à cru.

En effet, d'une part l'hystérèse de telles compositions est améliorée par rapport à celui de compositions contenant des élastomères ne possédant pas de fonction amine en extrémité de chaîne, notamment par rapport à celui de compositions contenant des élastomères diéniques modifiés par couplage au moyen d'un agent porteur d'au moins une fonction époxyde et une fonction alcoxysilane, mais ne possédant pas de fonction amine en extrémité de chaîne. D'autre part, la mise en œuvre à cru de telles compositions est similaire à celle de compositions contenant des élastomères non fonctionnalisés et reste acceptable.

L'invention a donc pour objet un élastomère diénique modifié comprenant majoritairement l'espèce fonctionnalisée en milieu de chaîne par un groupe alcoxysilane, éventuellement partiellement ou totalement hydrolysé en silanol, porteur d'une fonction époxyde et dont l'atome de silicium lie les deux morceaux de la chaîne, les extrémités de chaîne de l'élastomère diénique modifié étant fonctionnalisées à au moins 70% molaire par rapport au nombre de moles de bout de chaîne, par une fonction amine.

L'invention a également pour objet un procédé de synthèse dudit élastomère diénique modifié.

Un autre objet de l'invention est une composition de caoutchouc renforcée à base au moins d'une charge renforçante et d'une matrice élastomère comprenant au moins ledit élastomère diénique modifié.

L'invention a enfin pour objet un article semi-fini en caoutchouc pour pneumatique comprenant la composition selon l'invention, ainsi qu'un pneumatique comportant un tel article semi-fini.

La Figure 1 montre les propriétés dynamiques et la viscosité Mooney de compositions comprenant différents élastomères diéniques.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par fonctionnalisation des extrémités de chaîne à au moins 70% molaire par une fonction amine, on entend selon l'invention, un taux molaire de fonctionnalisation en extrémité de chaîne d'au moins 70% par rapport au nombre de moles de bout de chaîne. En d'autres termes, après la polymérisation des monomères, au moins 70% molaire des chaînes vivantes synthétisées porte à l'extrémité non réactive de la chaîne une fonction amine issue de l'initiateur de polymérisation.

Cela signifie donc que au moins 70% molaire des extrémités de chaîne de l'élastomère diénique modifié objet de l'invention sont fonctionnalisées par une fonction amine, et que en particulier au moins 70% molaire des extrémités de chaîne de l'espèce fonctionnalisée en milieu de chaîne par un groupe alcoxysilane, éventuellement partiellement ou totalement hydrolysé en silanol, porteur d'une fonction époxyde et dont l'atome de silicium lie les deux morceaux de la chaîne, sont fonctionnalisées par une fonction amine.

Il convient de préciser qu'il est connu de l'homme du métier que lorsqu'on modifie un élastomère par réaction d'un agent de fonctionnalisation sur l'élastomère vivant issu d'une étape de polymérisation anionique, on obtient un mélange d'espèces modifiées de cet élastomère dont la composition dépend notamment de la proportion de sites réactifs de l'agent de fonctionnalisation par rapport au nombre de chaînes vivantes. Ce mélange comprend des espèces fonctionnalisées en extrémité de chaîne, couplées, étoilées et/ou non fonctionnalisées.

Dans la présente description, on entend par "espèce couplée" ou "élastomère couplé" par un agent porteur d'une fonction époxyde et d'une fonction alcoxysilane, hydrolysable ou non en silanol, l'espèce élastomérique possédant le groupement fonctionnel au sein de sa chaîne élastomère, l'atome de silicium de ce groupement liant les deux morceaux de la chaîne de l'élastomère diénique. On dit que l'élastomère est couplé ou encore fonctionnalisé en milieu de chaîne, par opposition à la position "en extrémité de chaîne" et bien que le groupement ne se situe pas précisément au milieu de la chaîne élastomère.

L'élastomère selon l'invention peut également contenir les autres espèces fonctionnalisées ou non par le groupe alcoxysilane porteur d'une fonction époxyde. Lorsque le groupement fonctionnel se situe en un bout de chaîne, on dira alors que l'espèce est fonctionnalisée en bout ou extrémité de chaîne. L'atome de silicium de ce groupement est

directement lié à la chaîne de l'élastomère diénique. Lorsque le groupement fonctionnel est central auquel n chaînes ou branches élastomères (n>2) sont liées formant une structure en étoile de l'élastomère, on dira alors que l'espèce est étoilée. L'atome de silicium de ce groupement lie les n branches de l'élastomère diénique modifié entre elles.

Dans la présente demande, par "majoritairement" ou "majoritaire" en liaison avec un composé, on entend que ce composé est majoritaire parmi les composés du même type dans la composition, c'est-à-dire que c'est celui qui représente la plus grande fraction pondérale parmi les composés du même type. Ainsi, par exemple, un élastomère majoritaire est l'élastomère représentant la plus grande fraction pondérale par rapport au poids total des élastomères dans la composition. De la même manière, une charge dite majoritaire est celle représentant la plus grande fraction pondérale par rapport au poids total de l'ensemble des charges de la composition. Egalement, une espèce fonctionnelle d'un élastomère diénique modifié dite majoritaire est celle représentant la plus grande fraction pondérale parmi les espèces fonctionnalisées constituant l'élastomère diénique, par rapport au poids total de l'élastomère diénique modifié. Dans un système comprenant un seul composé d'un certain type, celui-ci est majoritaire au sens de la présente invention.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Comme expliqué précédemment, l'invention a pour objet un élastomère diénique modifié comprenant majoritairement l'espèce couplée par un agent porteur d'une fonction époxyde et d'une fonction alcoxysilane, hydrolysable ou non en silanol, l'atome de silicium liant les deux morceaux de la chaîne, et dont les deux extrémités de chaîne sont fonctionnalisées à au moins 70% molaire par une fonction amine.

Par élastomère diénique, doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non). Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de diènes conjugués utilisables dans le procédé conforme à l'invention conviennent notamment le butadiène-1,3, le 2-méthyl-1,3-butadiène, les 2,3 di(alcoyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène et le 2,4 hexadiène, etc.

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène et le vinylnaphtalène, etc.

L'élastomère diénique de la composition conforme à l'invention est choisi préférentiellement dans le groupe des élastomères diéniques fortement insaturés constitué par les polybutadiènes (BR), les polyisoprènes (IR) de synthèse, les copolymères de butadiène, en particulier les copolymères de butadiène et d'un monomère vinyl aromatique, les copolymères d'isoprène et les mélanges de ces élastomères. De tels copolymères sont plus particulièrement des copolymères de butadiène-styrène (SBR), des copolymères d'isoprène-butadiène (BIR), des copolymères d'isoprène-styrène (SIR) et des copolymères d'isoprène-butadiène-styrène (SBIR). Parmi ces copolymères, les copolymères de butadiène-styrène (SBR) sont particulièrement préférés.

L'espèce fonctionnalisée en milieu de chaîne par un groupe alcoxysilane, éventuellement partiellement ou totalement hydrolysé en silanol, porteur d'une fonction époxyde, et dont l'atome de silicium lie les deux morceaux de la chaîne, les extrémités de chaîne étant fonctionnalisées à au moins 70% molaire par une fonction amine, répond de préférence à la formule (I) suivante :

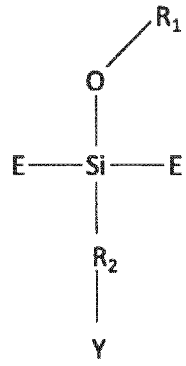

(I)

dans laquelle :

- le symbole E désigne un élastomère diénique fonctionnalisé à au moins 70% molaire en extrémité de chaîne par une fonction amine,
- $R_1$ désigne, en fonction du degré d'hydrolyse, un atome d'hydrogène ou un radical alkyle, linéaire ou ramifié, en $C_1$ - $C_{10}$, de préférence en $C_1$-$C_8$, de préférence encore un groupe alkyle en $C_1$-$C_4$, plus préférentiellement un atome d'hydrogène ou un radical éthyle ou méthyle;
- $R_2$ est un groupement hydrocarboné divalent aliphatique, saturé ou non, cyclique ou non, en $C_1$-$C_{18}$, ou aromatique en $C_6$-$C_{18}$, de préférence un groupement hydrocarboné divalent aliphatique linéaire ou ramifié, saturé en $C_1$-$C_{10}$, voire $C_1$-$C_6$, plus préférentiellement un groupement hydrocarboné divalent aliphatique linéaire saturé en $C_3$;
- Y représente l'un des restes :

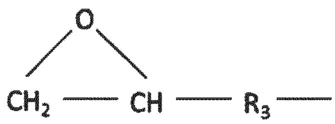

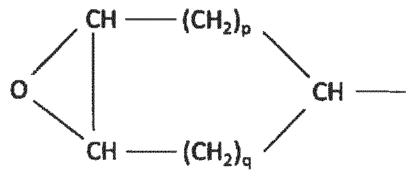

où $R_3$ est un radical hydrocarboné ayant de 1 à 6 atomes de carbone et pouvant comprendre un ou plusieurs atomes d'oxygène dans la chaîne hydrocarbonée, p et q sont des nombres entiers choisis parmi les valeurs 1, 2, 3 ou 4 étant entendu que la somme p+q doit représenter un nombre entier variant de 2 à 5.

Selon des variantes avantageuses de l'invention, au moins une des trois caractéristiques suivantes est respectée et de préférence les trois:

- $R_1$ représente un atome d'hydrogène ou un radical alkyle linéaire en $C_1$-$C_4$, de préférence un radical méthyle ou éthyle,
- $R_2$ est un groupement hydrocarboné divalent aliphatique linéaire ou ramifié, saturé en $C_1$-$C_6$, de préférence un groupement hydrocarboné divalent aliphatique linéaire saturé en $C_3$,
- $R_3$ comprend un atome d'oxygène dans la chaîne hydrocarbonée.

Selon un mode de réalisation préféré, l'élastomère diénique modifié selon l'invention comprend au moins 50% en poids, plus préférentiellement au moins 70% en poids par rapport à l'élastomère diénique modifié d'espèce fonctionnalisée en milieu de chaîne par le groupe alcoxysilane, éventuellement partiellement ou totalement hydrolysé en silanol, porteur d'une fonction époxyde et fonctionnalisée à au moins 70% molaire en bout de chaîne par une fonction amine.
Selon un autre mode de réalisation, combinable au précédent, l'espèce diénique fonctionnalisée en milieu de chaîne par le groupe alcoxysilane, éventuellement partiellement ou totalement hydrolysé en silanol, porteur d'une fonction époxyde, est fonctionnalisée à 100% en bout de chaîne par une fonction amine.
L'élastomère diénique modifié selon l'invention peut être préparé selon un procédé incluant la modification de l'élastomère par réaction d'un élastomère diénique vivant sur un agent de fonctionnalisation approprié, c'est-à-dire toute molécule au moins difonctionnelle en vue de coupler, la fonction étant tout type de groupement chimique connu par l'homme de l'art pour réagir avec un bout de chaîne vivant. Un tel procédé fait également l'objet de l'invention.
Ainsi, selon l'invention, l'élastomère diénique modifié est obtenu par la mise en œuvre des étapes suivantes :

- polymérisation anionique d'au moins un monomère diène conjugué en présence d'un initiateur de polymérisation possédant une fonction amine,
- modification de l'élastomère diénique vivant porteur d'un site actif obtenu à l'étape précédente par un agent de fonctionnalisation, susceptible de coupler les chaînes élastomères, porteur d'au moins une fonction époxyde et une fonction alcoxysilane hydrolysable en silanol, avec un rapport molaire de l'agent de fonctionnalisation à l'initiateur de polymérisation d'une valeur allant de 0,35 à 0,65.

Les initiateurs de polymérisation à fonction amine conduisent à des chaînes vivantes ayant un groupement amine à l'extrémité non réactive de la chaîne.

A titre d'initiateurs de polymérisation à fonction amine, on peut citer de manière préférée les amidures de lithium, produits de la réaction d'un composé organolithien, de préférence alkyllithien, et d'une amine secondaire acyclique ou cyclique, de préférence cyclique.

A titre d'amine secondaire utilisable pour préparer les initiateurs, on peut citer la diméthylamine, diéthylamine, dipropylamine, di-n-butylamine, di-sec-butylamine, dipentylamine, dihexylamine, di-n-octylamine, di-(2-ethylhexyl)amine, di-cyclohexylamine, N-méthylbenzylamine, diallylamine, morpholine, piperazine, 2,6-diméthylmorpholine, 2,6-diméthylpiperazine, 1-éthylpiperazine, 2-méthylpiperazine, 1-benzylpiperazine, piperidine, 3,3-diméthylpiperidine, 2,6-dimethylpiperidine, l-méthyl-4-(méthylamino)piperidine, 2,2,6,6-tetraméthylpiperidine, pyrrolidine, 2,5-diméthylpyrrolidine, azetidine, hexaméthylèneimine, heptaméthylèneimine, 5-benzyloxyindole, 3-azaspiro[5,5]undecane, 3-aza-bicycle[3.2.2]nonane, carbazole, bistriméthylsilylamine, la pyrrolidine et l'hexaméthylèneamine.

L'amine secondaire, lorsqu'elle est cyclique, est de préférence choisie parmi la pyrrolidine et l'hexaméthylèneamine.

Le composé alkyllithien est de préférence l'éthyllithium, le n-butyllithium (n-BuLi), l'isobutyllithium, etc.

De préférence, l'initiateur de polymérisation à fonction amine est soluble dans un solvant hydrocarboné sans utilisation d'un agent de solvatation.

L'initiateur de polymérisation à fonction amine est un produit de réaction d'un composé alkyllithien et d'une amine secondaire. En fonction du rapport molaire du composé alkyllithien à l'amine secondaire, le produit de la réaction peut comporter de l'alkyllithien résiduel. En conséquence, l'initiateur de polymérisation peut être constitué d'un mélange d'amidure de lithium et d'alkyllithien résiduel. Cet alkyllithien résiduel conduit à la formation de chaînes vivantes ne portant pas de groupement amine en extrémité de chaîne. Selon l'invention, l'initiateur de polymérisation ne contient pas plus de 30% de composé alkyllithien. Au-delà de cette valeur, les effets techniques recherchés, notamment l'amélioration des propriétés hystérétiques, ne sont pas satisfaisants. Selon une variante du procédé, l'initiateur de polymérisation ne contient pas de composé alkyllithien.

La polymérisation est de préférence effectuée en présence d'un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

La polymérisation peut être effectuée en continu ou en discontinu. On effectue généralement la polymérisation à une température comprise entre 20 °C et 150 °C et de préférence voisine de 30 °C à 110 °C.

L'élastomère diénique peut avoir toute microstructure qui est fonction des conditions de polymérisation utilisées. L'élastomère peut être à blocs, statistiques, séquencés, microséquencés, etc... et être préparé en dispersion ou en solution. La microstructure de cet élastomère peut être déterminée par la présence ou non d'un agent modifiant et/ou randomisant et les quantités d'agent modifiant et/ou randomisant employées.

La deuxième étape du procédé selon l'invention consiste en la modification de l'élastomère diénique vivant, obtenu à l'issue de l'étape de polymérisation anionique, selon des conditions opératoires favorisant la réaction de couplage de l'élastomère diénique par un agent de fonctionnalisation approprié. Cette étape conduit à la synthèse d'un élastomère diénique modifié comprenant majoritairement l'espèce couplée.

La réaction de modification de l'élastomère diénique vivant, obtenu à l'issue de la première étape, peut se dérouler à une température comprise entre - 20°C et 100 C, par addition sur les chaînes polymères vivantes ou inversement d'un agent de fonctionnalisation non polymérisable susceptible de former un groupement alcoxysilane, hydrolysable ou non en silanol, porteur d'une fonction époxyde, l'atome de silicium liant deux morceaux de la chaîne élastomérique. Cet agent de couplage non polymérisable permet notamment d'obtenir les structures de formule (I) décrites plus haut. Il s'agit particulièrement d'un agent de fonctionnalisation porteur d'au moins une fonction alcoxysilane, hydrolysable ou non en silanol, et deux fonctions réactives avec l'élastomère vivant, chacune de ces deux fonctions étant directement liée à l'atome de silicium, ainsi qu'une fonction époxyde.

Ainsi, selon une variante du procédé de l'invention, l'agent de fonctionnalisation répond à la formule :

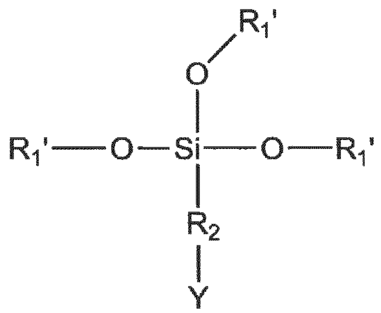

(II)

dans laquelle :

- $R_2$ est un groupement hydrocarboné divalent aliphatique, saturé ou non, cyclique ou non, en $C_1$-$C_{18}$, ou aromatique en $C_6$-$C_{18}$, de préférence un groupement hydrocarboné divalent, linéaire ou ramifié, aliphatique en $C_1$-$C_{10}$, de préférence en $C_1$-$C_6$, mieux un groupement hydrocarboné divalent aliphatique linéaire saturé en $C_3$;
- les radicaux $R_1$', linéaires ou ramifiés, identiques ou différents entre eux, représentent un groupe alkyle en $C_1$-$C_{10}$, de préférence en $C_1$-$C_8$, mieux un groupe alkyle en $C_1$-$C_4$, plus préférentiellement méthyle et éthyle,
- Y représente l'un des restes :

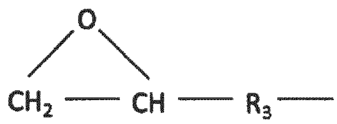

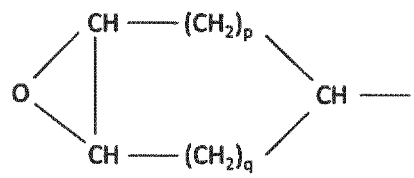

où $R_3$ est un radical hydrocarboné ayant de 1 à 6 atomes de carbone et pouvant comprendre un ou plusieurs atomes d'oxygène dans la chaîne hydrocarbonée, p et q sont des nombres entiers choisis parmi les valeurs 1, 2, 3 ou 4 étant entendu que la somme p+q doit représenter un nombre entier variant de 2 à 5.

Selon des variantes avantageuses de l'invention, au moins une des trois caractéristiques suivantes est respectée et de préférence les trois:

- $R_1$' représente un radical alkyle linéaire en $C_1$-$C_4$, de préférence un radical méthyle ou éthyle,
- $R_2$ est un groupement hydrocarboné divalent aliphatique linéaire ou ramifié, saturé en $C_1$-$C_6$, de préférence un groupement hydrocarboné divalent aliphatique linéaire saturé en $C_3$,
- $R_3$ comprend un atome d'oxygène dans la chaîne hydrocarbonée.

Les substituants alcoxy formés par le groupe $OR_1$' sont préférentiellement hydrolysables.

Préférentiellement, l'agent de fonctionnalisation est choisi parmi le 2-(glycidyloxyéthyl)triméthoxysilane, le 2-(glycidyloxyéthyl)triéthoxysilane, le 3-(glycidyloxypropyl)triméthoxysilane, le 3-(glycidyloxypropyl)triéthoxysilane, le 2-(3,4-époxycyclohexyl)-éthyltriméthoxysilane et le 2-(3,4-époxycyclohexyl)-éthyltriéthoxysilane.

Le mélangeage du polymère diénique vivant et de l'agent de fonctionnalisation peut être réalisé par tout moyen approprié. Le temps de réaction entre le polymère diénique vivant et l'agent de couplage peut être compris entre 10 secondes et 2 heures.

Le rapport molaire entre l'agent de fonctionnalisation et l'initiateur des chaînes polymères vivantes varie de 0,35 à 0,65, préférentiellement de 0,40 à 0,60 et encore plus préférentiellement de 0,45 à 0,55.

Le procédé de synthèse de l'élastomère diénique modifié selon l'invention peut se poursuivre de manière connue en soi par les étapes de récupération de l'élastomère modifié.

Selon des variantes de ce procédé, ces étapes comprennent une étape de stripping en vue de récupérer l'élastomère issu des étapes antérieures sous forme sèche. Cette étape de stripping peut avoir notamment pour effet d'hydrolyser tout ou partie des fonctions alcoxysilane hydrolysables de l'élastomère diénique modifié pour les transformer en fonctions silanol.

Selon d'autres variantes de ce procédé, ces étapes comprennent une étape spécifique d'hydrolyse dédiée à l'hydrolyse de tout ou partie des fonctions alcoxysilane hydrolysables de l'élastomère diénique modifié pour les transformer en fonctions silanol. Cette étape d'hydrolyse totale ou partielle peut être mise en oeuvre de manière connue en

soit par adjonction d'un composé acide ou basique. De telles étapes d'hydrolyse sont décrites par exemple dans le document EP 2 266 819 A1.

Selon d'autres variantes encore de l'invention, on peut également prévoir un étoilage supplémentaire de l'élastomère diénique modifié selon l'invention. Cet étoilage est avantageusement mis en œuvre afin de diminuer le fluage à cru de la matrice élastomère. Le procédé de préparation de l'élastomère diénique modifié selon l'invention peut alors, selon une mise en œuvre, comprendre une étape formation d'espèces étoilées, généralement antérieurement à l'étape de modification. Cette étape d'étoilage peut être réalisée par réaction avec un agent d'étoilage connu en soi par exemple à base d'étain ou de silicium, ou encore avec le même agent de type trialcoxysilane porteur d'une fonction époxyde avec un rapport molaire de l'agent de fonctionnalisation à l'initiateur de polymérisation d'une valeur inférieure ou égale 0,33.

Les étapes de ces différentes variantes sont combinables en elles.

Un autre objet de l'invention est une composition de caoutchouc renforcée à base d'au moins une charge renforçante et une matrice élastomère comprenant au moins un élastomère diénique modifié tel que décrit plus haut. Il doit être entendu que la composition de caoutchouc peut comprendre un ou plusieurs de ces élastomères diéniques modifiés selon l'invention.

La composition de caoutchouc renforcée selon l'invention peut se présenter à l'état réticulé ou à l'état non réticulé, autrement dit réticulable.

L'élastomère diénique modifié selon l'invention peut être, selon différentes variantes, utilisé seul dans la composition ou en coupage avec au moins un autre élastomère diénique conventionnel, qu'il soit étoilé, couplé, fonctionnalisé ou non. Préférentiellement, cet autre élastomère diénique utilisé dans l'invention est choisi dans le groupe des élastomères diéniques fortement insaturés constitué par les polybutadiènes (BR) les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR). On peut également envisager un coupage avec tout élastomère synthétique autre que diénique, voire avec tout polymère autre qu'élastomère, par exemple un polymère thermoplastique.

On notera que l'amélioration des propriétés de la composition selon l'invention sera d'autant plus élevée que la proportion du ou des élastomères différents des élastomères diéniques modifiés de l'invention dans cette composition sera réduite.

Ainsi, de préférence, la matrice élastomère comprend à titre majoritaire l'élastomère diénique modifié selon l'invention.

Lorsque l'élastomère conventionnel utilisé en coupage est du caoutchouc naturel et/ou un ou plusieurs polymères diéniques comme par exemple les polybutadiènes, les polyisoprènes, les copolymères butadiène- styrène ou butadiène-styrène-isoprène, cet élastomère ou ces élastomères, modifiés ou non, peuvent alors être présents de 1 à 70 parties en poids pour 100 parties d'élastomère diénique modifié selon l'invention.

Plus préférentiellement, la matrice élastomère est uniquement constituée de l'élastomère diénique modifié selon l'invention.

La composition de caoutchouc de l'invention comprend, outre au moins une matrice élastomère telle que décrit ci-dessus, au moins une charge renforçante.

On peut utiliser tout type de charge renforçante connue pour ses capacités à renforcer une composition de caoutchouc utilisable pour la fabrication de bandes de roulement de pneumatiques, par exemple du noir de carbone, une charge inorganique renforçante telle que de la silice à laquelle est associé de manière connue un agent de couplage, ou encore un mélange de ces deux types de charge.

Comme noirs de carbone conviennent tous les noirs de carbone, utilisés individuellement ou sous forme de mélanges, notamment les noirs du type HAF, ISAF, SAF conventionnellement utilisés dans les bandes de roulement des pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375. Les noirs de carbone pourraient être par exemple déjà incorporés à l'élastomère isoprénique sous la forme d'un masterbatch (voir par exemple demandes WO 97/36724 ou WO 99/16600).

Comme charge inorganique renforçante, doit être entendu dans la présente demande, par définition, toute charge inorganique ou minérale quelles que soient sa couleur et son origine (naturelle ou de synthèse), capable de renforcer à elle seule, sans autre moyen qu'un agent de couplage intermédiaire, une composition de caoutchouc destinée à la fabrication de pneumatiques; une telle charge se caractérise généralement, de manière connue, par la présence de groupes hydroxyle (-OH) à sa surface.

Comme charges inorganiques renforçantes conviennent notamment des charges minérales du type siliceux, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$,

notamment entre 60 et 300 $m^2/g$. On citera également les charges minérales du type alumineux, en particulier de l'alumine ($Al_2O_3$) ou des (oxyde)hydroxydes d'aluminium, ou encore des oxydes de titane renforçants, par exemple décrits dans US 6 610 261 et US 6 747 087. Comme charges renforçantes conviennent également des charges renforçantes d'une autre nature, notamment du noir de carbone, dès lors que ces charges renforçantes seraient recouvertes d'une couche siliceuse, ou bien comporteraient à leur surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

L'état physique sous lequel se présente la charge inorganique renforçante est indifférent, que ce soit sous forme de poudre, de microperles, de granulés, de billes ou toute autre forme densifiée appropriée. Bien entendu, on entend également par charge inorganique renforçante des mélanges de différentes charges renforçantes, en particulier de charges siliceuses hautement dispersibles telles que décrites précédemment.

De manière préférentielle, le taux de charge renforçante totale (noir de carbone et/ou autre charge renforçante telle que silice) est compris entre 10 et 200 pce, plus préférentiellement entre 30 et 150 pce, et encore plus préférentiellement entre 70 et 130 pce, l'optimum étant de manière connue différent selon les applications particulières visées.

Selon une variante de l'invention, la charge renforçante est majoritairement autre que du noir de carbone, c'est-à-dire qu'elle comprend plus de 50% en poids du poids total de la charge, d'une ou de plusieurs charges autres que du noir de carbone, notamment une charge inorganique renforçante telle que la silice, voire elle est exclusivement constituée d'une telle charge.

Selon cette variante, lorsque du noir de carbone est également présent, il peut être utilisé à un taux inférieur à 20 pce, plus préférentiellement inférieur à 10 pce (par exemple entre 0,5 et 20 pce, notamment de 1 à 10 pce).

Selon une autre variante de l'invention, on utilise une charge renforçante comportant majoritairement du noir de carbone, et optionnellement de la silice ou une autre charge inorganique.

Lorsque la charge renforçante comprend une charge nécessitant l'utilisation d'un agent de couplage pour établir la liaison entre la charge et l'élastomère, la composition de caoutchouc selon l'invention comprend en outre, de manière classique, un agent susceptible d'assurer efficacement cette liaison. Lorsque la silice est présente dans la composition à titre de charge renforçante, on peut utiliser comme agents de couplage des organosilanes, notamment des alkoxysilanes polysulfurés ou des mercaptosilanes, ou encore des polyorganosiloxanes au moins bifonctionnels.

Dans la composition selon l'invention, le taux d'agent de couplage est avantageusement inférieur à 20 pce, étant entendu qu'il est en général souhaitable d'en utiliser le moins possible. Son taux est préférentiellement compris entre 0,5 et 12 pce. La présence de l'agent de couplage dépend de celle de la charge inorganique renforçante. Son taux est aisément ajusté par l'homme du métier selon le taux de cette charge; il est typiquement de l'ordre de 0,5% à 15% en poids par rapport à la quantité de charge inorganique renforçante autre que du noir de carbone.

La composition de caoutchouc selon l'invention peut également contenir, en complément des agents de couplage, des activateurs de couplage, des agents de recouvrement des charges ou plus généralement des agents d'aide à la mise en œuvre susceptibles de manière connue, grâce à une amélioration de la dispersion de la charge dans la matrice de caoutchouc et à un abaissement de la viscosité de la composition, d'améliorer sa faculté de mise en œuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent également contenir des charges organiques renforçantes qui peuvent remplacer tout ou partie des noirs de carbone ou des autres charges inorganiques renforçantes décrites plus haut. Comme exemples de charges organiques renforçantes, on peut citer les charges organiques de polyvinyle fonctionnalisé telles que décrites dans les demandes WO-A-2006/069792, WO-A-2006/069793, WO-A-2008/003434 et WO-A-2008/003435.

La composition de caoutchouc selon l'invention peut comporter également tout ou partie des additifs usuels habituellement utilisés dans les compositions d'élastomères destinées à la fabrication de pneumatiques, comme par exemple des pigments, des charges non renforçantes, des agents de protection tels que cires anti-ozone, anti-ozonants chimiques, anti-oxydants, des agents anti-fatigue, des agents plastifiants, des résines renforçantes ou plastifiantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

La composition est fabriquée dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé de préparation d'une composition selon l'invention, comprend généralement :

(i) la réalisation, à une température maximale comprise entre 130 °C et 200 °C, d'un premier temps de travail thermo-mécanique des constituants de la composition comprenant l'élastomère diénique modifié selon l'invention et une charge renforçante, à l'exception d'un système de réticulation, puis
(ii) la réalisation, à une température inférieure à ladite température maximale dudit premier temps, d'un second temps de travail mécanique au cours duquel est incorporé ledit système de réticulation.

Ce procédé peut également comprendre, préalablement à la réalisation des étapes (i) et (ii) précitées, les étapes de la préparation de l'élastomère diénique majoritairement couplé par un groupe - alcoxysilane porteur d'une fonction époxyde et lié à l'élastomère diénique par l'atome de silicium selon le procédé décrit plus haut.
L'invention a également pour objet un article semi-fini en caoutchouc pour pneumatique, comprenant une composition de caoutchouc selon l'invention, réticulable ou réticulée ou constitué d'une telle composition.
La composition finale ainsi obtenue peut ensuite être calandrée, par exemple sous la forme d'une feuille, d'une plaque ou encore extrudée, par exemple pour former un profilé de caoutchouc utilisable comme produit semi-fini en caoutchouc destiné au pneumatique. Un tel produit semi-fini fait également l'objet de l'invention.
En raison de l'amélioration du compromis hystérèse/mise en œuvre à cru qui caractérise une composition de caoutchouc renforcée selon l'invention, on notera qu'une telle composition peut constituer tout produit semi-fini du pneumatique et tout particulièrement la bande de roulement, diminuant notamment sa résistance au roulement et améliorant la résistance à l'usure.
L'invention a donc enfin pour objet un pneumatique comportant un article semi-fini selon l'invention, en particulier une bande de roulement.
Les caractéristiques précitées de la présente invention, ainsi que d'autres, seront mieux comprises à la lecture de la description suivante de plusieurs exemples de réalisation de l'invention, donnés à titre illustratif et non limitatif.

## Exemples

### Exemples de préparation d'élastomères modifiés

**Préparation du polymère A :** SBR non fonctionnel - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 $mol.L^{-1}$ dans le méthylcyclohexane. Après neutralisation des impuretés dans la solution à polymériser par addition de n-butyllithium, sont ajoutés 535 mL de n-butyllithium à 0,05 $mol.L^{-1}$ dans le méthylcyclohexane. La polymérisation est conduite à 50 °C.
Après 40 minutes, le taux de conversion des monomères atteint 90 %. Ce taux est déterminé par pesée d'un extrait séché à 140 °C, sous la pression réduite de 200 mmHg. 530 mL d'une solution de méthanol à 0,15 $mol.L^{-1}$ dans le toluène sont alors ajoutés. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.
La viscosité Mooney du polymère est de 60.
La masse molaire moyenne en nombre, $M_n$, de ce copolymère, déterminée par la technique SEC, est de 192 000 $g.mol^{-1}$ et l'indice de polymolécularité, Ip, est de 1,07.
La microstructure de ce copolymère est déterminée par la méthode NIR. Le taux de motifs 1,2 est de 59 % par rapport aux unités butadiène. Le taux massique de styrène est de 25 %.
La température de transition vitreuse de ce copolymère est de - 24 °C.

**Préparation du polymère B :** SBR fonctionnel amine en extrémité de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 $mol.L^{-1}$ dans le méthylcyclohexane. Après neutralisation des impuretés dans la solution à polymériser par addition de n-butyllithium, sont ajoutés 1,07 L d'hexaméthylèneamine lithiée à 0,05 $mol.L^{-1}$ dans le méthylcyclohexane. La polymérisation est conduite à 50 °C.
Après 32 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur

puis stoppé avec un excès de méthanol par rapport au lithium. La viscosité inhérente (viscosité "initiale"), laquelle est mesurée à 25 °C à 0,1 $g.L^{-1}$ dans le toluène, est de 1,10 $dL.g^{-1}$. 268 mL d'une solution de diméthyldichlorosilane à 0,1 $mol.L^{-1}$ dans le méthylcyclohexane sont ajoutés. Après 20 minutes de réaction à 50 °C, la solution est antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,80 $dL.g^{-1}$. Le saut de viscosité, défini comme le rapport de ladite viscosité "finale" sur ladite viscosité "initiale", est ici de 1,63. La viscosité Mooney du polymère ainsi couplé est de 59.

La masse molaire moyenne en nombre, $M_n$, de ce copolymère, déterminée par la technique SEC, est de 188 000 $g.mol^{-1}$ et l'indice de polymolécularité, Ip, est de 1,09.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Préparation du polymère C :** SBR fonctionnel époxyde + alcoxysilane en milieu de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 $mol.L^{-1}$ dans le méthylcyclohexane. Après neutralisation des impuretés dans la solution à polymériser par addition de n-butyllithium, sont ajoutés 1,07 L de n-butyllithium à 0,05 $mol.L^{-1}$ dans le méthylcyclohexane. La polymérisation est conduite à 50 °C.

Après 30 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 $g.dL^{-1}$ dans le toluène, est de 1,10 $dL.g^{-1}$. 268 mL d'une solution de 3-(glycidyloxypropyl)triméthoxysilane à 0,1 $mol.L^{-1}$ dans le méthylcyclohexane sont ajoutés. Après 20 minutes de réaction à 50 °C, la solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,77 $dL.g^{-1}$. Le saut de viscosité, défini comme le rapport de ladite viscosité "finale" sur ladite viscosité "initiale", est ici de 1,61. La viscosité Mooney du polymère ainsi couplé est de 58.

La masse molaire moyenne en nombre, $M_n$, de ce copolymère, déterminée par la technique SEC, est de 186 000 $g.mol^{-1}$ et l'indice de polymolécularité, Ip, est de 1,14.

Le pourcentage massique d'espèces couplées, déterminé par la technique de SEC haute résolution, est de 86 %.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Préparation du polymère D :** SBR fonctionnel silanol en milieu de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 $mol.L^{-1}$ dans le méthylcyclohexane. Après neutralisation des impuretés dans la solution à polymériser par addition de n-butyllithium, sont ajoutés 1,07 L de n-butyllithium à 0,05 $mol.L^{-1}$ dans le méthylcyclohexane. La polymérisation est conduite à 50 °C.

Après 30 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 $g.L^{-1}$ dans le toluène, est de 1,10 $dL.g^{-1}$. 268 mL d'une solution de méthyltrichlorosilane à 0,1 $mol.L^{-1}$ dans le méthylcyclohexane sont ajoutés. Après 20 minutes de réaction à 0 °C, un excès d'eau est ajouté pour hydrolyser les fonctions SiCl présentes sur les chaînes polymère. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,80 $dL.g^{-1}$. Le saut de viscosité, défini comme le rapport de ladite viscosité "finale" sur ladite viscosité "initiale", est ici de 1,64. La viscosité Mooney du polymère ainsi couplé est de 60.

La masse molaire moyenne en nombre, $M_n$, de ce copolymère, déterminée par la technique SEC, est de 190 000 $g.mol^{-1}$ et l'indice de polymolécularité, Ip, est de 1,10.

Le pourcentage massique d'espèces couplées, déterminé par la technique de SEC haute résolution, est de 82 %.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Préparation du polymère E :** SBR fonctionnel aminoalcoxysilane en milieu de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 $mol.L^{-1}$ dans le méthylcyclohexane. Après neutralisation des impuretés dans la solution à polymériser par addition de n-butyllithium, sont ajoutés 1,07 L de n-butyllithium à 0,05 $mol.L^{-1}$ dans le méthylcyclohexane. La polymérisation est conduite à 50 °C.

Après 30 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 $g.dL^{-1}$ dans le toluène, est de 1,11 $dL.g^{-1}$. 268 mL d'une solution de 3-(N,N-diméthylaminopropyl)triméthoxysilane à 0,1 $mol.L^{-1}$ dans le méthylcyclohexane sont ajoutés. Après 20 minutes de réaction à 50 °C, la solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,78 $dL.g^{-1}$. Le saut de viscosité, défini comme le rapport de ladite viscosité "finale" sur ladite viscosité "initiale", est ici de 1,60. La viscosité Mooney du polymère ainsi couplé est de 59.

La masse molaire moyenne en nombre, Mn, de ce copolymère, déterminée par la technique SEC, est de 187 000 $g.mol^{-1}$ et l'indice de polymolécularité, Ip, est de 1,13.

Le pourcentage massique d'espèces couplées, déterminé par la technique de SEC haute résolution, est de 85 %.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Préparation du polymère F :** SBR fonctionnel silanol + polyéther en milieu de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 $mol.L^{-1}$ dans le méthylcyclohexane. Après neutralisation des impuretés dans la solution à polymériser par addition de n-butyllithium, sont ajoutés 1,07 L de n-butyllithium à 0,05 $mol.L^{-1}$ dans le méthylcyclohexane. La polymérisation est conduite à 50 °C.

Après 30 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 $g.dL^{-1}$ dans le toluène, est de 1,10 $dL.g^{-1}$. 268 mL d'une solution de poly(oxy-1,2-ethanediyl), α-[3-(dichloromethylsilyl)propyl]-ω-[3-(dichloromethylsilyl)propoxy] à 0,1 $mol.L^{-1}$ dans le diéthyl éther sont ajoutés. Après 90 minutes de réaction à 50 °C, un excès d'eau est ajouté afin de neutraliser les fonctions SiCl présentes sur les chaînes polymère. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,76 $dL.g^{-1}$. Le saut de viscosité, défini comme le rapport de ladite viscosité "finale" sur ladite viscosité "initiale", est ici de 1,60. La viscosité Mooney du polymère ainsi couplé est de 59.

La masse molaire moyenne en nombre, $M_n$, de ce copolymère, déterminée par la technique SEC, est de 186 000 $g.mol^{-1}$ et l'indice de polymolécularité, Ip, est de 1,15.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Préparation du polymère G :** SBR fonctionnel silanol en extrémité de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 $mol.L^{-1}$ dans le méthylcyclohexane. Après neutralisation des impuretés dans la solution à polymériser par addition de n-butyllithium, sont ajoutés 535 mL de n-butyllithium à 0,05 $mol.L^{-1}$ dans le méthylcyclohexane. La polymérisation est conduite à 50 °C.

Après 40 minutes, le taux de conversion des monomères atteint 90 %. Ce taux est déterminé par pesée d'un extrait séché à 140 °C, sous la pression réduite de 200 mmHg. 134 mL d'une solution d'hexaméthylcyclotrisiloxane à 0,1 $mol.L^{-1}$ dans le méthylcyclohexane sont alors ajoutés. Après 30 minutes à 60 °C, 535 mL d'une solution de méthanol dans le toluène à 0,15 $mol.L^{-1}$ sont alors ajoutés. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité Mooney du polymère est de 59.

La masse molaire moyenne en nombre, $M_n$, de ce copolymère, déterminée par la technique SEC, est de 190 000 $g.mol^{-1}$ et l'indice de polymolécularité, Ip, est de 1,05

La microstructure de ce copolymère est déterminée par la méthode NIR. Le taux de motifs 1,2 est de 59 % par rapport aux unités butadiène. Le taux massique de styrène est de 25 %.

La température de transition vitreuse de ce copolymère est de - 24 °C.

**Préparation du polymère H :** SBR fonctionnel amine en extrémité de chaîne et fonctionnel époxyde + alcoxysilane en milieu de chaîne selon l'invention

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 $mol.L^{-1}$ dans le méthylcyclohexane. Après neutralisation des impuretés dans la solution à polymériser par addition de n-butyllithium, sont ajoutés 1,07 L d'hexaméthylèneamine lithiée à 0,05 $mol.L^{-1}$ dans le méthylcyclohexane. La polymérisation est conduite à 50 °C.

Après 30 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 $g.L^{-1}$ dans le toluène, est de 1,10 $dL.g^{-1}$. 268 mL d'une solution de 3-(glycidyloxypropyl)triméthoxysilane à 0,1 $mol.L^{-1}$ dans le méthylcyclohexane sont ajoutés. Après 20 minutes de réaction à 50 °C, la solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,79 $dL.g^{-1}$. Le saut de viscosité, défini comme le rapport de ladite viscosité "finale" sur ladite viscosité "initiale", est ici de 1,63. La viscosité Mooney du polymère ainsi couplé est de 61.

La masse molaire moyenne en nombre, $M_n$, de ce copolymère, déterminée par la technique SEC, est de 189 000 $g.mol^{-1}$ et l'indice de polymolécularité, Ip, est de 1,15.

Le pourcentage massique d'espèces couplées, déterminé par la technique de SEC haute résolution, est de 87 %.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Préparation du polymère I :** SBR fonctionnel amine en extrémité de chaîne et fonctionnel silanol en milieu de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 $mol.L^{-1}$ dans le méthylcyclohexane. Après neutralisation des impuretés dans la solution à polymériser par addition de n-butyllithium, sont ajoutés 1,07 L d'hexaméthylèneamine lithiée à 0,05 $mol.L^{-1}$ dans le méthylcyclohexane. La polymérisation est conduite à 50 °C.

Après 30 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est

mesurée à 25 °C à 0,1 g.$L^{-1}$ dans le toluène, est de 1,09 dL.$g^{-1}$. 268 mL d'une solution de méthyltrichlorosilane à 0,1 mol.$L^{-1}$ dans le méthylcyclohexane sont ajoutés. Après 20 minutes de réaction à 0 °C, un excès d'eau est ajouté pour hydrolyser les fonctions SiCl présentes sur les chaînes polymère. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,78 dL.$g^{-1}$. Le saut de viscosité, défini comme le rapport de ladite viscosité "finale" sur ladite viscosité "initiale", est ici de 1,63. La viscosité Mooney du polymère ainsi couplé est de 59.

La masse molaire moyenne en nombre, $M_n$, de ce copolymère, déterminée par la technique SEC, est de 187 000 g.$mol^{-1}$ et l'indice de polymolécularité, Ip, est de 1,12.

Le pourcentage massique d'espèces couplées, déterminé par la technique de SEC haute résolution, est de 84 %.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Préparation du polymère J :** SBR fonctionnel amine en extrémité de chaîne et fonctionnel aminoalcoxysilane en milieu de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 mol.$L^{-1}$ dans le méthylcyclohexane. Après neutralisation des impuretés dans la solution à polymériser par addition de n-butyllithium, sont ajoutés 1,07 L d'hexaméthylèneamine lithiée à 0,05 mol.$L^{-1}$ dans le méthylcyclohexane. La polymérisation est conduite à 50 °C.

Après 32 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 g.$dL^{-1}$ dans le toluène, est de 1,10 dL.$g^{-1}$. 268 mL d'une solution de 3-(N,N-diméthylaminopropyl)triméthoxysilane à 0,1 mol.$L^{-1}$ dans le méthylcyclohexane sont ajoutés. Après 20 minutes de réaction à 50 °C, la solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,79 dL.$g^{-1}$. Le saut de viscosité, défini comme le rapport de ladite viscosité "finale" sur ladite viscosité "initiale", est ici de 1,63. La viscosité Mooney du polymère ainsi couplé est de 59.

La masse molaire moyenne en nombre, $M_n$, de ce copolymère, déterminée par la technique SEC, est de 189 000 g.$mol^{-1}$ et l'indice de polymolécularité, Ip, est de 1,13.

Le pourcentage massique d'espèces couplées, déterminé par la technique de SEC haute résolution, est de 79 %.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

Le taux de fonction $SiOCH_3$ résiduel après stripping/séchage, déterminé par RMN $^1H$, est de 45 %.

**Préparation du polymère K :** SBR fonctionnel amine en extrémité de chaîne et fonctionnel silanol + polyéther en milieu de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tétrahydrofurfuryl éther à 0,1 mol.$L^{-1}$ dans le méthylcyclohexane. Après neutralisation des impuretés dans la solution à polymériser par addition de n-butyllithium, sont ajoutés 1,07 L d'hexaméthylèneamine lithiée à 0,05 mol.$L^{-1}$ dans le méthylcyclohexane. La polymérisation est conduite à 50 °C.

Après 30 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 g.$dL^{-1}$ dans le toluène, est de 1,09 dL.$g^{-1}$. 268 mL d'une solution de poly(oxy-1,2-éthanediyl), $\alpha$-[3-(dichlorométhylsilyl)propyl]-$\omega$-[3-(dichlorométhylsilyl)propoxy] à 0,1 mol.$L^{-1}$ dans le diéthyl éther sont ajoutés. Après 90 minutes de réaction à 50 °C, un excès d'eau est ajouté afin de neutraliser les fonctions SiCl présentes sur les chaînes polymère. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,74 $dL.g^{-1}$. Le saut de viscosité, défini comme le rapport de ladite viscosité "finale" sur ladite viscosité "initiale", est ici de 1,60. La viscosité Mooney du polymère ainsi couplé est de 58.

La masse molaire moyenne en nombre, $M_n$, de ce copolymère, déterminée par la technique SEC, est de 183 000 $g.mol^{-1}$ et l'indice de polymolécularité, Ip, est de 1,15.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

## Mesures et tests utilisés

### Chromatographie d'exclusion stérique

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45$\mu$m avant injection.

L'appareillage utilisé est une chaîne chromatographique "WATERS alliance". Le solvant d'élution est soit le tétrahydrofurane, soit le tétrahydrofurane + 1%vol. de diisopropylamine + 1%vol. de triéthylamine, le débit de 1 $mL.min^{-1}$, la température du système de 35° C et la durée d'analyse de 30 min. Un jeu de deux colonnes WATERS de dénomination commerciale "STYRAGEL HT6E" est utilisé. Le volume injecté de la solution de l'échantillon de polymère est 100 $\mu$L. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 25% massique de motifs type styrène, 23% massique de motifs type 1-2 et 50% massique de motifs type 1-4 trans.

### Chromatographie d'exclusion stérique haute résolution

La technique de SEC haute résolution est utilisée pour déterminer les pourcentages massiques des différentes populations de chaînes présentes dans un échantillon de polymère.

Il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45 $\mu$m avant injection.

L'appareillage utilisé est une chaîne chromatographique "WATERS alliance 2695". Le solvant d'élution est le tétrahydrofurane, le débit de 0,2 $ml.min^{-1}$, la température du système de 35 °C. Un jeu de trois colonnes identiques en série est utilisé (Shodex, longueur 300 mm, diamètre 8 mm). Le nombre de plateaux théoriques du jeu de colonnes est supérieur à 22 000. Le volume injecté de la solution de l'échantillon de polymère est 50 $\mu$L. Le détecteur est un réfractomètre différentiel "WATERS 2414" et le logiciel d'exploitation des données chromatographiques est le système "WATERS EMPOWER".

Les masses molaires calculées sont relatives à une courbe d'étalonnage réalisée pour des SBR de microstructure suivante : 25 % massique de motifs type styrène, 23 % massique de motifs type 1,2 et 50 % massique de motifs type 1,4-trans.

### Viscosité Mooney

Pour les polymères et les compositions de caoutchouc, les viscosités Mooney $ML_{(1+4)}$100 °C sont mesurées selon la norme ASTM D-1646.

Un consistomètre oscillant est utilisé tel que décrit dans la norme ASTM D-1646. La mesure de plasticité Mooney se fait selon le principe suivant : la composition à l'état cru (i.e. avant cuisson) est moulée dans une enceinte cylindrique chauffée à 100 °C. Après une minute de préchauffage, le rotor tourne au sein de l'éprouvette à 2 tours/minute

et le couple utile pour entretenir ce mouvement après 4 minutes de rotation est mesuré. La plasticité Mooney $ML_{(1+4)}$ est exprimée en "unité Mooney" (UM, avec 1 UM = 0,83 N.m).

Calorimétrie différentielle

Les températures de transition vitreuse (Tg) des élastomères sont déterminées à l'aide d'un calorimètre différentiel ("differential scanning calorimeter").

Spectroscopie proche infrarouge (NIR)

La microstructure des élastomères est caractérisée par la technique de spectroscopie proche infrarouge (NIR).
La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN $^{13}C$. Le taux de styrène et la microstructure sont alors calculés à partir du spectre NIR d'un film d'élastomère d'environ 730 $\mu$m d'épaisseur. L'acquisition du spectre est réalisée en mode transmission entre 4000 et 6200 $cm^{-1}$ avec une résolution de 2 $cm^{-1}$, à l'aide d'un spectromètre proche infrarouge à transformée de Fourier Bruker Tensor 37 équipé d'un détecteur InGaAs refroidi par effet Peltier.

Viscosité inhérente

La viscosité inhérente des élastomères à 25 °C est déterminée à partir d'une solution d'élastomère à 0,1 $g.dL^{-1}$ dans le toluène, selon le principe suivant :
La viscosité inhérente est déterminée par la mesure du temps d'écoulement t de la solution de polymère et du temps d'écoulement $t_o$ du toluène, dans un tube capillaire.
Dans un tube Ubbelhode (diamètre du capillaire 0,46 mm, capacité 18 à 22 mL), placé dans un bain thermostaté à 25 $\pm$ 0,1 °C, le temps d'écoulement du toluène et celui de la solution polymère à 0,1 $g.dL^{-1}$ sont mesurés.
La viscosité inhérente est obtenue par la relation suivante :

$$\eta_{inh} = \frac{1}{C} \ln\left[\frac{(t)}{(t_o)}\right]$$

avec :

C : concentration de la solution de polymère dans le toluène en $g.dL^{-1}$,
*t* : temps d'écoulement de la solution de polymère dans le toluène en seconde,
$t_o$ : temps d'écoulement du toluène en seconde,
$\eta_{inh}$ : viscosité inhérente exprimée en $dL.g^{-1}$.

Propriétés dynamiques

La propriété dynamique tan $\delta$ max est mesurée sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 $mm^2$ de section), soumis à une sollicitation sinusoïdale en cisaillement simple alterné, à la fréquence de 10Hz, dans les conditions normales de température (40°C) selon la norme ASTM D 1349-99. On effectue un balayage en amplitude de déformation de 0,1% à 50% crête-crête (cycle aller), puis de 50% à 0,1% crête-crête (cycle retour). Le résultat exploité est le facteur de perte tan $\delta$. Pour le cycle retour, on indique la valeur maximale de tan $\delta$ observée, noté tan $\delta$ max. Cette valeur est représentative de l'hystérèse du matériau et dans le cas présent de la résistance au roulement : plus la valeur de tan $\delta$ max est faible, plus la résistance au roulement est basse.

**Exemples comparatifs de compositions de caoutchouc**

On compare onze compositions reportées dans le Tableau 1 ci-après. Dix d'entre elles (compositions 2 à 11) sont non-conformes vis-à-vis de la composition préconisée par l'invention. Les formulations sont exprimées en pourcentage en poids pour 100 parties en poids d'élastomère (pce).

Tableau 1

| | Exemple | Exemples comparatifs | | | | | | | | | |
|---|---|---|---|---|---|---|---|---|---|---|---|
| | 1 | 2 | 3 | 4 | 5 | 6 | 7 | 8 | 9 | 10 | 11 |
| Pol. **A** | | 100 | | | | | | | | | |
| Pol. **B** | | | 100 | | | | | | | | |
| Pol. **C** | | | | 100 | | | | | | | |
| Pol. **D** | | | | | 100 | | | | | | |
| Pol. **E** | | | | | | 100 | | | | | |
| Pol. **F** | | | | | | | 100 | | | | |
| Pol. **G** | | | | | | | | 100 | | | |
| Pol. **H** | 100 | | | | | | | | | | |
| Pol. **I** | | | | | | | | | 100 | | |
| Pol. **J** | | | | | | | | | | 100 | |
| Pol. **K** | | | | | | | | | | | 100 |
| Silice (1) | 80 | 80 | 80 | 80 | 80 | 80 | 80 | 80 | 80 | 80 | 80 |
| N234 | 1 | 1 | 1 | 1 | 1 | 1 | 1 | 1 | 1 | 1 | 1 |
| Huile MES (2) | 15 | 15 | 15 | 15 | 15 | 15 | 15 | 15 | 15 | 15 | 15 |
| Résine (3) | 15 | 15 | 15 | 15 | 15 | 15 | 15 | 15 | 15 | 15 | 15 |
| Agent de couplage (4) | 6,4 | 6,4 | 6,4 | 6,4 | 6,4 | 6,4 | 6,4 | 6,4 | 6,4 | 6,4 | 6,4 |
| ZnO | 2,5 | 2,5 | 2,5 | 2,5 | 2,5 | 2,5 | 2,5 | 2,5 | 2,5 | 2,5 | 2,5 |
| Acide stéarique | 2 | 2 | 2 | 2 | 2 | 2 | 2 | 2 | 2 | 2 | 2 |
| Anti-oxydant (5) | 1,9 | 1,9 | 1,9 | 1,9 | 1,9 | 1,9 | 1,9 | 1,9 | 1,9 | 1,9 | 1,9 |
| Cire anti-ozone « C32ST » (6) | 1,5 | 1,5 | 1,5 | 1,5 | 1,5 | 1,5 | 1,5 | 1,5 | 1,5 | 1,5 | 1,5 |
| Diphénylguanidine | 1,5 | 1,5 | 1,5 | 1,5 | 1,5 | 1,5 | 1,5 | 1,5 | 1,5 | 1,5 | 1,5 |
| Soufre | 1,2 | 1,2 | 1,2 | 1,2 | 1,2 | 1,2 | 1,2 | 1,2 | 1,2 | 1,2 | 1,2 |
| Sulfénamide (7) | 2 | 2 | 2 | 2 | 2 | 2 | 2 | 2 | 2 | 2 | 2 |

(1)Silice "Zeosil 1165MP " de Rhodia.
(2)Catenex® SBR de Shell.
(3)Polylimonène.
(4)"Si69" de Degussa.
(5)N-(1,3-dimethylbutyl)-N'-phenyl-p-phenylenediamine.
(6)Anti-ozone de Repsol.
(7)N-cyclohexyl-2-benzothiazylsulphenamide.

Pour les essais qui suivent, on procède de la manière suivante:
Chacune des compositions est réalisée, dans un premier temps, par un travail thermo-mécanique, puis, dans un second temps de finition, par un travail mécanique.

On introduit dans un mélangeur interne de laboratoire de type « Banbury », dont la capacité est de 400 $cm^3$, qui est rempli à 72% et dont la température initiale est de 90°C, l'élastomère, deux tiers de la silice, l'agent de couplage, la diphénylguanidine et le noir de carbone.

Le travail thermo-mécanique est réalisé au moyen de palettes dont la vitesse moyenne est de 50 tr/min et dont la température est de 90°C.

Après une minute, on introduit le dernier tiers de silice, l'antioxydant, l'acide stéarique et la cire anti-ozone,

l'huile MES et la résine, toujours sous travail thermo-mécanique.

Après deux minutes, on introduit l'oxyde de zinc, la vitesse des palettes étant de 50 tr/min.

Le travail thermo-mécanique est encore conduit pendant deux minutes, jusqu'à une température maximale de tombée de 160°C environ.

On récupère le mélange ainsi obtenu, on le refroidit puis, dans un mélangeur externe (homo-finisseur), on ajoute le soufre et la sulfénamide à 30°C, en mélangeant encore le tout pendant une durée de 3 à 4 minutes (second temps de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

Les résultats sont présentés dans le Tableau 2 et sur la Figure 1.

Tableau 2

| **Résultats caoutchouterie (tan(δ)max 40°C, $ML_{(1+4)}$100°C) :** | | | | | | | | | | | |
|---|---|---|---|---|---|---|---|---|---|---|---|
| | Exemple | Exemples comparatifs | | | | | | | | | |
| | **1** | **2** | **3** | **4** | **5** | **6** | **7** | **8** | **9** | **10** | **11** |
| Tan(δ)$_{max}$ 40°C | 0,14 | 0,3 | 0,22 | 0,225 | 0,21 | 0,165 | 0,16 | 0,22 | 0,158 | 0,125 | 0,137 |
| $ML_{(1+4)}$100°C | 100 | 77 | 112 | 67 | 62 | 68 | 61 | 105 | 96 | 92 | 97 |

Les résultats du Tableau 2 concernant Tan δmax sont également présentés dans le Tableau 3.

Tableau 3

| Composition | Tan δ max 40°C |
|---|---|
| 1 (H)<br>4 (C) | 0,14<br>0,225 |
| 9 (I)<br>5 (D) | 0.158<br>0,21 |
| 10 (J)<br>6 (E) | 0,125<br>0,165 |
| 11 (K)<br>7 (F) | 0,137<br>0,16 |

La Figure 1 montre que la composition 1 contenant le SBR fonctionnel amine en extrémité de chaîne et fonctionnel époxyde + alcoxysilane en milieu de chaîne H présente une valeur de tan δ max 40°C inférieure à la composition 2 comprenant le polymère témoin A (non fonctionnel), à la composition 3 comprenant le polymère témoin B (fonctionnel amine en extrémité de chaîne) et aux compositions 4-5-6-7-8 comprenant respectivement les polymères témoin C (fonctionnel époxyde + alcoxysilane en milieu de chaîne), D (fonctionnel silanol en milieu de chaîne), E (fonctionnel aminoalcoxysilane en milieu de chaîne), F (fonctionnel silanol + polyéther en milieu de chaîne), G (fonctionnel silanol en extrémité de chaîne). Cela traduit une hystérèse améliorée.

Il apparaît également sur la Figure 1 et le Tableau 3 que la diminution de tan δ max 40 °C entre la composition 1 contenant le polymère H selon l'invention et la composition 4 contenant le polymère témoin C (fonctionnel époxyde + alcoxysilane en milieu de chaîne) est significativement supérieure à la diminution de tan δ max 40 °C entre les composition 9 (polymère I : fonctionnel silanol en milieu de chaîne et amine en extrémité de chaîne) et composition 5 (polymère D : fonctionnel silanol en milieu de chaîne), les composition 10 (polymère J : fonctionnel aminoalcoxysilane en milieu de chaîne et amine en extrémité de chaîne) et composition 6 (polymère E : fonctionnel aminoalcoxysilane en milieu de chaîne), et enfin les composition 11 (polymère K : fonctionnel silanol+polyéther en milieu de chaîne et amine en extrémité de chaîne) et composition 7 (polymère F : fonctionnel silanol+polyéther en milieu de chaîne). Cela traduit une diminution significative et inattendue de l'hystérèse par combinaison d'une fonctionnalisation époxyde + alcoxysilane en milieu de chaîne et d'une fonctionnalisation amine en extrémité de chaîne.

La mise en œuvre de la composition 1 reste tout à fait acceptable notamment au vue de la composition 2 qui

contient un élastomère non fonctionnel habituellement utilisé dans les formulations pour semi-finis destinés à la réalisation de pneumatiques.

L'élastomère diénique modifié selon l'invention permet donc d'obtenir un compromis hystérèse/mise en œuvre à cru particulièrement intéressant.

## Revendications

1. Elastomère diénique modifié comprenant majoritairement l'espèce fonctionnalisée en milieu de chaîne par un groupe alcoxysilane, éventuellement partiellement ou totalement hydrolysé en silanol, porteur d'une fonction époxyde et dont l'atome de silicium lie les deux morceaux de la chaîne, les extrémités de chaîne de l'élastomère diénique modifié étant fonctionnalisées à au moins 70% molaire par rapport au nombre de moles de bout de chaîne, par une fonction amine.

2. Elastomère diénique modifié selon la revendication 1, **caractérisé en ce que** l'espèce fonctionnalisée en milieu de chaîne par un groupe alcoxysilane, éventuellement partiellement ou totalement hydrolysé en silanol, porteur d'une fonction époxyde, et dont l'atome de silicium lie les deux morceaux de la chaîne, les extrémités de chaîne étant fonctionnalisées à au moins 70% molaire par une fonction amine, répond à la formule (I) suivante :

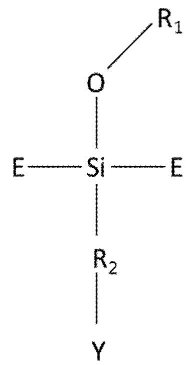

(I)

dans laquelle :

- le symbole E désigne un élastomère diénique fonctionnalisé à au moins 70% molaire en extrémité de chaîne par une fonction amine,
- $R_1$ désigne, en fonction du degré d'hydrolyse, un atome d'hydrogène ou un radical alkyle, linéaire ou ramifié, en $C_1$ - $C_{10}$, de préférence en $C_1$-$C_8$, de préférence encore un groupe alkyle en $C_1$-$C_4$, plus préférentiellement un atome d'hydrogène ou un radical éthyle ou méthyle;
- $R_2$ est un groupement hydrocarboné divalent aliphatique, saturé ou non, cyclique ou non, en $C_1$-$C_{18}$, ou aromatique en $C_6$-$C_{18}$, de préférence un groupement hydrocarboné divalent aliphatique linéaire ou ramifié, saturé en $C_1$-$C_{10}$, voire $C_1$-$C_6$, plus préférentiellement un groupement hydrocarboné divalent aliphatique linéaire saturé en $C_3$;
- Y représente l'un des restes :

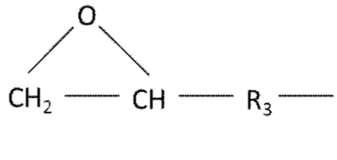

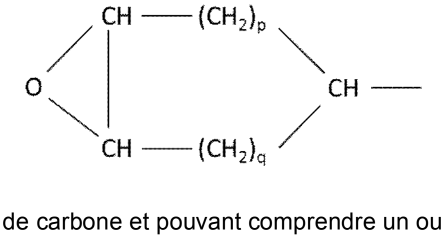

où $R_3$ est un radical hydrocarboné ayant de 1 à 6 atomes de carbone et pouvant comprendre un ou plusieurs atomes d'oxygène dans la chaîne hydrocarbonée, p et q sont des nombres entiers choisis parmi les valeurs 1, 2, 3 ou 4 étant entendu que la somme p+q doit représenter un nombre entier variant de 2 à 5.

3. Elastomère diénique modifié selon la revendication 2, **caractérisé en ce que** $R_1$ représente un atome d'hydrogène

ou un radical alkyle linéaire en $C_1$-$C_4$, de préférence un radical méthyle ou éthyle.

**4.** Elastomère diénique modifié selon la revendication 2 ou 3, **caractérisé en ce que** $R_2$ est un groupement hydrocarboné divalent aliphatique linéaire ou ramifié, saturé en $C_1$-$C_6$, de préférence un groupement hydrocarboné divalent aliphatique linéaire saturé en $C_3$.

**5.** Elastomère diénique modifié selon l'une quelconque des revendications 2 à 4 **caractérisé en ce que** $R_3$ comprend un atome d'oxygène dans la chaîne hydrocarbonée.

**6.** Elastomère diénique modifié selon l'une quelconque des revendications 2 à 5, **caractérisé en ce que** l'élastomère diénique modifié est un copolymère de butadiène et d'un monomère vinylaromatique, notamment un SBR.

**7.** Elastomère diénique modifié selon l'une des revendications 1 à 6, **caractérisé en ce qu'**il comprend au moins 70% en poids, par rapport à l'élastomère diénique modifié, de l'espèce fonctionnalisée en milieu de chaîne par le groupe alcoxysilane, éventuellement partiellement ou totalement hydrolysé en silanol, porteur d'une fonction époxyde, et dont l'atome de silicium lie les deux morceaux de la chaîne, les extrémités de chaîne étant fonctionnalisées à au moins 70% molaire par une fonction amine.

**8.** Procédé de préparation d'un élastomère diénique modifié tel que défini dans l'une quelconque des revendications précédentes, **caractérisé en ce qu'**il comprend les étapes suivantes:

- polymérisation anionique d'au moins un monomère diène conjugué en présence d'un initiateur de polymérisation possédant une fonction amine,
- modification de l'élastomère diénique vivant porteur d'un site actif obtenu à l'étape précédente par un agent de fonctionnalisation, susceptible de coupler les chaînes élastomères, porteur d'au moins une fonction époxyde et une fonction alcoxysilane hydrolysable en silanol, avec un rapport molaire de l'agent de fonctionnalisation à l'initiateur de polymérisation d'une valeur allant de 0,35 à 0,65.

**9.** Procédé de préparation selon la revendication 8, **caractérisé en ce que** l'initiateur de polymérisation à fonction amine est choisi parmi les amidures de lithium obtenus à partir d'une amine secondaire, de préférence cyclique, et d'un composé organolithien.

**10.** Procédé de préparation selon la revendication 8 ou 9, **caractérisé en ce que** l'agent de fonctionnalisation répond à la formule

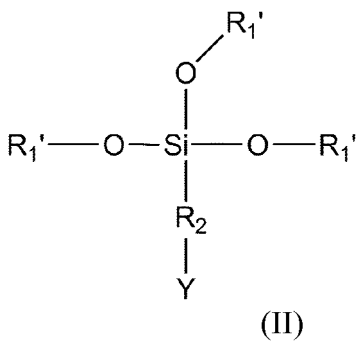

(II)

dans laquelle :

- $R_2$ est un groupement hydrocarboné divalent aliphatique, saturé ou non, cyclique ou non, en $C_1$-$C_{18}$, ou aromatique en $C_6$-$C_{18}$, de préférence un groupement hydrocarboné divalent, linéaire ou ramifié, aliphatique en $C_1$-$C_{10}$, de préférence en $C_1$-$C_6$, mieux un groupement hydrocarboné divalent aliphatique linéaire saturé en $C_3$;
- les radicaux $R_1$', linéaires ou ramifiés, identiques ou différents entre eux, représentent un groupe alkyle en $C_1$-$C_{10}$, de préférence en $C_1$-$C_8$, mieux un groupe alkyle en $C_1$-$C_4$, plus préférentiellement méthyle et éthyle,
- Y représente l'un des restes :

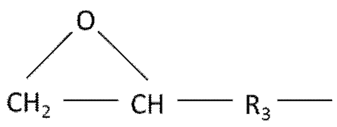 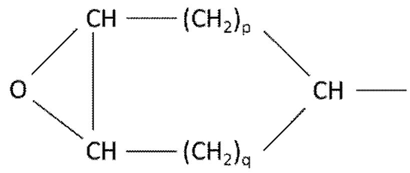

où $R_3$ est un radical hydrocarboné ayant de 1 à 6 atomes de carbone et pouvant comprendre un ou plusieurs atomes d'oxygène dans la chaîne hydrocarbonée, p et q sont des nombres entiers choisis parmi les valeurs 1, 2, 3 ou 4 étant entendu que la somme p+q doit représenter un nombre entier variant de 2 à 5.

11. Procédé de préparation selon la revendication 10, **caractérisé en ce que** l'agent de fonctionnalisation est choisi parmi le 2-(glycidyloxyéthyl)triméthoxysilane, le 2-(glycidyloxyéthyl)triéthoxysilane, le 3-(glycidyloxypropyl)triméthoxysilane, le 3-(glycidyloxypropyl)triéthoxysilane, le 2-(3,4-époxycyclohexyl)-éthyltriméthoxysilane et le 2-(3,4-époxycyclohexyl)-éthyltriéthoxysilane.

12. Composition de caoutchouc renforcée à base d'au moins une charge renforçante et une matrice élastomère comprenant au moins un élastomère diénique modifié tel que défini dans l'une quelconque des revendications 1 à 7.

13. Composition de caoutchouc selon la revendication 12, **caractérisée en ce que** ladite charge renforçante comprend une charge inorganique renforçante de type siliceuse selon une fraction massique supérieure à 50 % et allant jusqu'à 100 %.

14. Article semi-fini en caoutchouc pour pneumatique, **caractérisé en ce qu'**il comprend une composition de caoutchouc réticulable ou réticulée selon l'une quelconque des revendications 12 à 13.

15. Pneumatique, **caractérisé en ce qu'**il comporte un article semi-fini tel que défini dans la revendication 14.

## Patentansprüche

1. Modifiziertes Dienelastomer, umfassend hauptsächlich die Spezies, die in der Kettenmitte durch eine Alkoxysilangruppe, die gegebenenfalls teilweise oder vollständig zu Silanol hydrolysiert ist und eine Epoxidfunktion trägt und deren Siliciumatom an zwei Stücke der Kette gebunden ist, funktionalisiert ist, wobei die Kettenenden des Dienelastomers zu mindestens 70 Mol-%, bezogen auf die Zahl der Mole am Kettenende, durch eine Aminfunktion funktionalisiert sind.

2. Modifiziertes Dienelastomer nach Anspruch 1, **dadurch gekennzeichnet, dass** die Spezies, die in der Kettenmitte durch eine Alkoxysilangruppe, die gegebenenfalls teilweise oder vollständig zu Silanol hydrolysiert ist und eine Epoxidfunktion trägt und deren Siliciumatom an zwei Stücke der Kette gebunden ist, funktionalisiert ist, wobei die Kettenenden des Dienelastomers zu mindestens 70 Mol-%, bezogen auf die Zahl der Mole am Kettenende, durch eine Aminfunktion funktionalisiert sind, der folgenden Formel (I) entspricht:

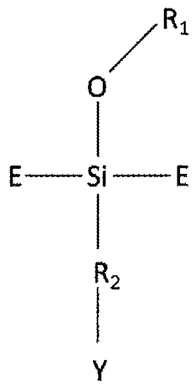

(I)

in der:

- das Symbol E für ein Dienelastomer, das am Kettenende zu mindestens 70 Mol-% durch eine Aminfunktion funktionalisiert ist, steht,
- $R_1$ in Abhängigkeit von Hydrolysegrad für ein Wasserstoffatom oder einen linearen oder verzweigten $C_1$-$C_{10}$- und vorzugsweise $C_1$-$C_8$-Alkylrest, noch weiter bevorzugt eine $C_1$-$C_4$-Alkylgruppe, weiter bevorzugt ein Wasserstoffatom oder einen Ethyl- oder Methylrest, steht;
- $R_2$ für eine cyclische oder acyclische, gesättigte oder ungesättigte zweiwertige aliphatische $C_1$-$C_{18}$-Kohlenwasserstoffgruppe oder aromatische $C_6$-$C_{18}$-Kohlenwasserstoffgruppe, weiter bevorzugt eine gesättigte, lineare oder verzweigte zweiwertige aliphatische $C_1$-$C_{10}$- oder sogar $C_1$-$C_6$-Kohlenwasserstoffgruppe und noch weiter bevorzugt eine gesättigte lineare zweiwertige aliphatische $C_3$-Kohlenwasserstoffgruppe steht;
- Y für einen der Reste:

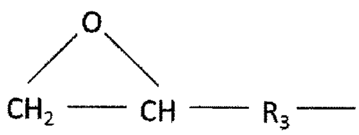

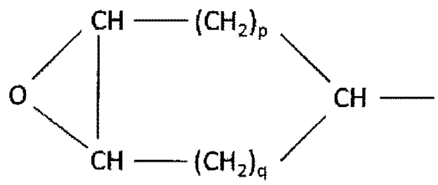

steht, wobei $R_3$ für einen Kohlenwasserstoffrest, der 1 bis 6 Kohlenstoffatome aufweist und ein oder mehrere Sauerstoffatome in der Kohlenwasserstoffkette enthalten kann, steht und p und q für ganze Zahlen stehen, die aus den Werten 1, 2, 3 oder 4 ausgewählt sind, mit der Maßgabe, dass die Summe p+q für eine ganze Zahl von 2 bis 5 stehen muss.

3. Modifiziertes Dienelastomer nach Anspruch 2, **dadurch gekennzeichnet, dass** $R_1$ für ein Wasserstoffatom oder einen linearen $C_1$-$C_4$-Alkylrest, vorzugsweise einen Methyl- oder Ethylrest, steht.

4. Modifiziertes Dienelastomer nach Anspruch 2 oder 3, **dadurch gekennzeichnet, dass** $R_2$ für eine gesättigte, lineare oder verzweigte aliphatische zweiwertige $C_1$-$C_6$-Kohlenwasserstoffgruppe, vorzugsweise eine gesättigte, lineare oder verzweigte aliphatische zweiwertige $C_3$-Kohlenwasserstoffgruppe, steht.

5. Modifiziertes Dienelastomer nach einem der Ansprüche 2 bis 4, **dadurch gekennzeichnet, dass** $R_3$ ein Sauerstoffatom in der Kohlenwasserstoffkette umfasst.

6. Modifiziertes Dienelastomer nach einem der Ansprüche 2 bis 5, **dadurch gekennzeichnet, dass** es sich bei dem modifizierten Dienelastomer um ein Copolymer von Butadien und einem vinylaromatischen Monomer, insbesondere einen SBR, handelt.

7. Modifiziertes Dienelastomer nach einem der Ansprüche 1 bis 6, **dadurch gekennzeichnet, dass** es mindestens 70 Gew.-%, bezogen auf das modifizierte Dienelastomer, an der Spezies, die in der Kettenmitte durch eine Alkoxysilangruppe, die gegebenenfalls teilweise oder vollständig zu Silanol hydrolysiert ist und eine Epoxidfunktion trägt und deren Siliciumatom an zwei Stücke der Kette gebunden ist, funktionalisiert ist, wobei die Kettenenden des Dienelastomers zu mindestens 70 Mol-%, bezogen auf die Zahl der Mole am Kettenende, durch eine Aminfunktion funktionalisiert sind, umfasst.

8. Verfahren zur Herstellung eines modifizierten Dienelastomers gemäß einem der vorhergehenden Ansprüche, **dadurch gekennzeichnet, dass** es folgende Schritte umfasst:

- anionische Polymerisation von mindestens einem konjugierten Dienmonomer in Gegenwart eines Polymerisationsinitiators mit einer Aminfunktion;
- Modifizierung des im vorhergehenden Schritt erhaltenen lebenden Elastomers, das ein aktives Zentrum trägt, mit einem Funktionalisierungsmittel, das zur Kupplung der Elastomerketten befähigt ist und mindestens eine Epoxidfunktion und eine zu Silanol hydrolysierbare Alkoxysilan-Funktion trägt, mit einem Molverhältnis von Funktionalisierungsmittel zu Polymerisationsinitiator im Bereich von 0,35 bis 0,65.

9. Herstellungsverfahren nach Anspruch 8, **dadurch gekennzeichnet, dass** der Polymerisationsinitiator mit einer Aminfunktion aus Lithiumamiden, die aus einem sekundären Amin, vorzugsweise einem cyclischen sekundären

Aminen, und einer Organolithiumverbindung erhalten werden, ausgewählt wird.

**10.** Herstellungsverfahren nach Anspruch 8 oder 9, **dadurch gekennzeichnet, dass** das Funktionalisierungsmittel der Formel

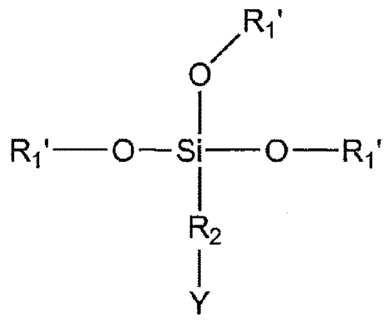

(II)

entspricht, in der:

- $R_2$ für eine cyclische oder acyclische, gesättigte oder ungesättigte zweiwertige aliphatische $C_1$-$C_{18}$-Kohlenwasserstoffgruppe oder aromatische $C_6$-$C_{18}$-Kohlenwasserstoffgruppe, weiter bevorzugt eine gesättigte, lineare oder verzweigte zweiwertige aliphatische $C_1$-$C_{10}$- und vorzugsweise $C_1$-$C_6$-Kohlenwasserstoffgruppe und noch besser eine gesättigte lineare zweiwertige aliphatische $C_3$-Kohlenwasserstoffgruppe steht;
- die Reste $R_1$', die linear oder verzweigt und gleich oder voneinander verschieden sind, für eine lineare oder verzweigte $C_1$-$C_{10}$- und vorzugsweise $C_1$-$C_8$-Alkylgruppe, noch besser eine $C_1$-$C_4$-Alkylgruppe, weiter bevorzugt ein Wasserstoffatom oder einen Ethyl- oder Methylrest, stehen,
- Y für einen der Reste:

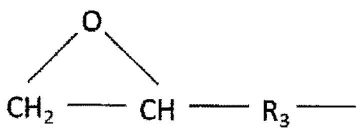

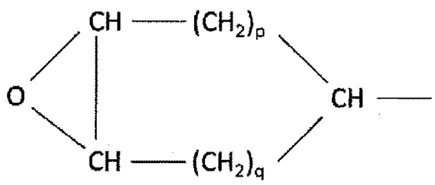

steht, wobei $R_3$ für einen Kohlenwasserstoffrest, der 1 bis 6 Kohlenstoffatome aufweist und ein oder mehrere Sauerstoffatome in der Kohlenwasserstoffkette enthalten kann, steht und p und q für ganze Zahlen stehen, die aus den Werten 1, 2, 3 oder 4 ausgewählt sind, mit der Maßgabe, dass die Summe p+q für eine ganze Zahl von 2 bis 5 stehen muss.

**11.** Herstellungsverfahren nach Anspruch 10, **dadurch gekennzeichnet, dass** das Funktionalisierungsmittel aus 2-(Glycidyloxyethyl)trimethoxysilan, 2-(Glycidyloxyethyl)triethoxysilan, 3-(Glycidyloxypropyl)trimethoxysilan, 3-(Glycidyloxypropyl)-triethoxysilan, 2-(3,4-Epoxcyclohexyl)ethyltrimethoxysilan und 2-(3,4-Epoxcyclohexyl)ethyltriethoxysilan ausgewählt wird.

**12.** Verstärkte Kautschukzusammensetzung auf Basis mindestens eines verstärkenden Füllstoffs und einer Elastomermatrix, die mindestens ein modifiziertes Dienelastomer gemäß einem der Ansprüche 1 bis 7 umfasst.

**13.** Kautschukzusammensetzung nach Anspruch 12, **dadurch gekennzeichnet, dass** der verstärkende Füllstoff einen verstärkenden anorganischen Füllstoff des Siliciumdioxid-Typs gemäß einem Massenanteil von mehr als 50 % und bis zu 100 % umfasst.

**14.** Kautschuk-Halbzeug für Reifen, **dadurch gekennzeichnet, dass** es eine vernetzbare oder vernetzte Kautschukzusammensetzung nach einem der Ansprüche 12 bis 13 umfasst.

**15.** Reifen, **dadurch gekennzeichnet, dass** er ein Halbzeug gemäß Anspruch 14 umfasst.

## Claims

1. Modified diene elastomer comprising predominantly the entity functionalized in the middle of the chain by an alkoxysilane group, optionally partially or completely hydrolysed to give silanol, bearing an epoxide function and the silicon atom of which bonds the two pieces of the chain, the chain ends of the modified diene elastomer being functionalized to at least 70 mol%, with respect to the number of moles of chain end, by an amine function.

2. Modified diene elastomer according to Claim 1, **characterized in that** the entity functionalized in the middle of the chain by an alkoxysilane group, optionally partially or completely hydrolysed to give silanol, bearing an epoxide function and the silicon atom of which bonds the two pieces of the chain, the chain ends being functionalized to at least 70 mol% by an amine function, corresponds to the following formula (I):

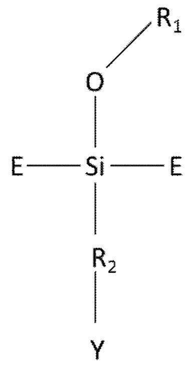

(I)

in which:

- the symbol E denotes a diene elastomer functionalized to at least 70 mol% at the chain end by an amine function,
- $R_1$ denotes, as a function of the degree of hydrolysis, a hydrogen atom or a linear or branched $C_1$ - $C_{10}$, preferably $C_1$-$C_8$, alkyl radical, more preferably a $C_1$-$C_4$ alkyl group, more preferably a hydrogen atom or an ethyl or methyl radical;
- $R_2$ is a saturated or unsaturated, cyclic or non-cyclic, divalent $C_1$-$C_{18}$ aliphatic hydrocarbon group or $C_6$-$C_{18}$ aromatic hydrocarbon group, preferably a saturated, linear or branched, divalent $C_1$-$C_{10}$, indeed even $C_1$-$C_6$, aliphatic hydrocarbon group, more preferably a saturated linear divalent $C_3$ aliphatic hydrocarbon group;
- Y represents one of the residues:

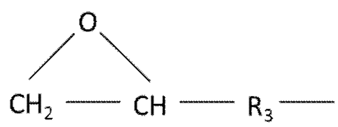

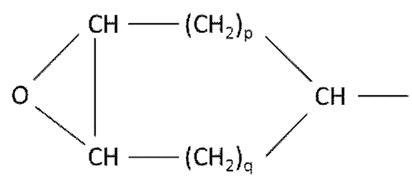

where $R_3$ is a hydrocarbon radical which has from 1 to 6 carbon atoms and which can comprise one or more oxygen atoms in the hydrocarbon chain and p and q are integers chosen from the values 1, 2, 3 or 4, it being understood that the sum p+q has to represent an integer varying from 2 to 5.

3. Modified diene elastomer according to Claim 2, **characterized in that** $R_1$ represents a hydrogen atom or a linear $C_1$-$C_4$ alkyl radical, preferably a methyl or ethyl radical.

4. Modified diene elastomer according to Claim 2 or 3, **characterized in that** $R_2$ is a saturated, linear or branched, divalent $C_1$-$C_6$ aliphatic hydrocarbon group, preferably a saturated linear divalent $C_3$ aliphatic hydrocarbon group.

5. Modified diene elastomer according to any one of Claims 2 to 4, **characterized in that** $R_3$ comprises an oxygen atom in the hydrocarbon chain.

6. Modified diene elastomer according to any one of Claims 2 to 5, **characterized in that** the modified diene elastomer

is a copolymer of butadiene and of a vinylaromatic monomer, in particular an SBR.

**7.** Modified diene elastomer according to one of Claims 1 to 6, **characterized in that** it comprises at least 70% by weight, with respect to the modified diene elastomer, of the entity functionalized in the middle of the chain by the alkoxysilane group, optionally partially or completely hydrolysed to give silanol, bearing an epoxide function and the silicon atom of which bonds the two pieces of the chain, the chain ends being functionalized to at least 70 mol% by an amine function.

**8.** Process for the preparation of a modified diene elastomer as defined in any one of the preceding claims, **characterized in that** it comprises the following stages:

- anionic polymerization of at least one conjugated diene monomer in the presence of a polymerization initiator having an amine function,
- modification of the living diene elastomer bearing an active site obtained in the preceding stage by a functionalization agent, capable of coupling the elastomer chains, bearing at least one epoxide function and an alkoxysilane function, which can be hydrolysed to give silanol, with a molar ratio of the functionalization agent to the polymerization initiator with a value ranging from 0.35 to 0.65.

**9.** Preparation process according to Claim 8, **characterized in that** the polymerization initiator comprising an amine function is chosen from lithium amides obtained from a secondary amine, preferably a cyclic secondary amine, and from an organolithium compound.

**10.** Preparation process according to Claim 8 or 9, **characterized in that** the functionalization agent corresponds to the formula:

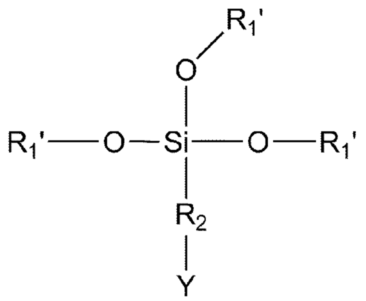

(II)

in which:

- $R_2$ is a saturated or unsaturated, cyclic or non-cyclic, divalent $C_1$-$C_{18}$ aliphatic hydrocarbon group or $C_6$-$C_{18}$ aromatic hydrocarbon group, preferably a linear or branched divalent $C_1$-$C_{10}$, preferably $C_1$-$C_6$, aliphatic hydrocarbon group, better still a saturated linear divalent $C_3$ aliphatic hydrocarbon group;
- the linear or branched $R_1$' radicals, which are identical to or different from one another, represent a $C_1$-$C_{10}$, preferably $C_1$-$C_8$, alkyl group, better still a $C_1$-$C_4$ alkyl group, more preferably methyl and ethyl;
- Y represents one of the residues:

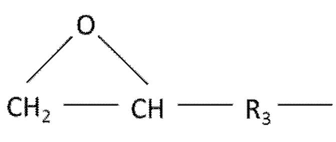

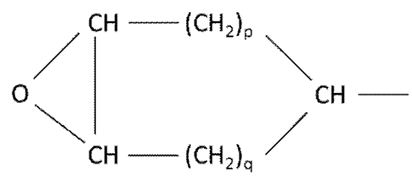

where $R_3$ is a hydrocarbon radical which has from 1 to 6 carbon atoms and which can comprise one or more oxygen atoms in the hydrocarbon chain and p and q are integers chosen from the values 1, 2, 3 or 4, it being understood that the sum p+q has to represent an integer varying from 2 to 5.

**11.** Preparation process according to Claim 10, **characterized in that** the functionalization agent is chosen from (2-glycidyloxyethyl)trimethoxysilane, (2-glycidyloxyethyl)triethoxysilane, (3-glycidyloxypropyl)trimethoxysilane, (3-glycidyloxypropyl)triethoxysilane, 2-(3,4-epoxycyclohexyl)ethyltrimethoxysilane and 2-(3,4-epoxycyclohexyl)ethyltriethoxysilane.

**12.** Reinforced rubber composition based on at least one reinforcing filler and an elastomer matrix comprising at least one modified diene elastomer as defined in any one of Claims 1 to 7.

**13.** Rubber composition according to Claim 12, **characterized in that** the said reinforcing filler comprises a reinforcing inorganic filler of siliceous type according to a fraction by weight of greater than 50% and ranging up to 100%.

**14.** Semi-finished article made of rubber for a tyre, **characterized in that** it comprises a crosslinkable or crosslinked rubber composition according to any one of Claims 12 to 13.

**15.** Tyre, **characterized in that** it comprises a semi-finished article as defined in Claim 14.

FIG.1

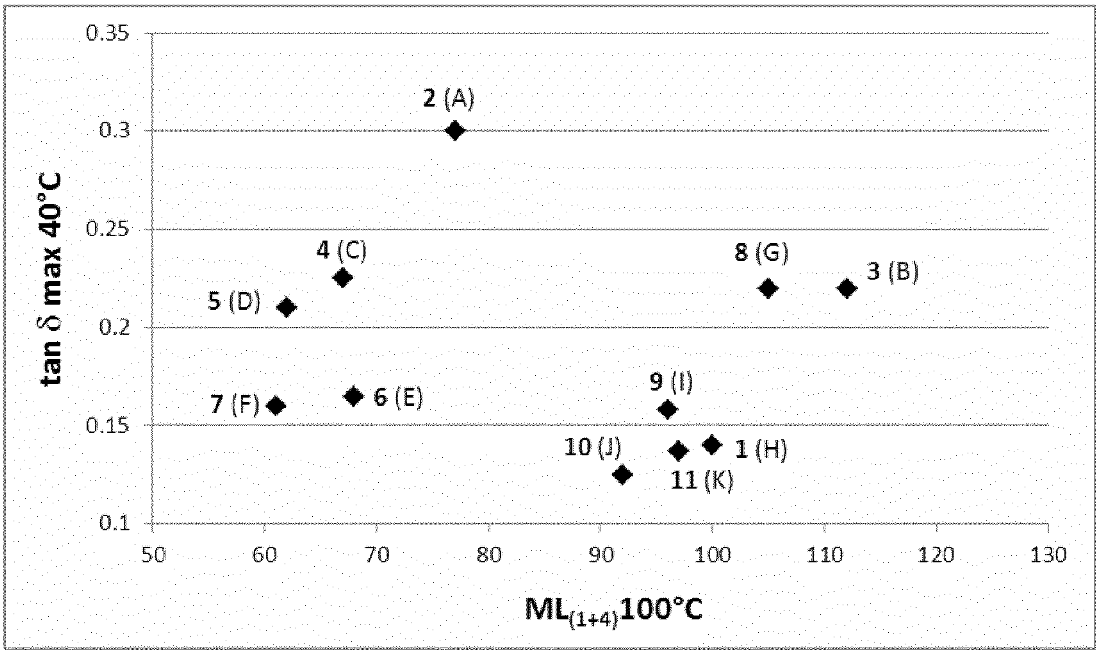
0.35
0.3
0.25
0.2
0.15
0.1
tan δ max 40°C
2 (A)
4 (C)
5 (D)
8 (G)
3 (B)
9 (I)
7 (F)
6 (E)
10 (J)
1 (H)
11 (K)
50
60
70
80
90
100
110
120
130
ML(1+4)100°C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2951178 B1
- FR 2915202 B1
- EP 778311 B1
- WO 2009077837 A1
- FR 2867477 A1
- US 8071689 B2
- US 8106130 B2
- WO 2009133068 A1
- EP 0692493 A1
- EP 0692493 A
- FR 2951186 A1
- EP 2266819 A1
- WO 9736724 A
- WO 9916600 A
- US 6610261 B
- US 6747087 B
- WO 9637547 A
- WO 9928380 A
- WO 2006069792 A
- WO 2006069793 A
- WO 2008003434 A
- WO 2008003435 A
- WO 0210269 A


### Littérature non-brevet citée dans la description


- **VILMIN, F. ; DUSSAP, C. ; COSTE, N.** *Applied Spectroscopy,* 2006, vol. 60, 619-29